# EUROPEAN PATENT APPLICATION

(11) **EP 0 846 485 A1**
(43) Date of publication of application: **10.06.1998**
(21) Application number: 97203748.5
(22) Date of filing: 29.11.1997
(51) Int. Cl.: B01D 17/04

(54) **Compressor installation with oil separation from condensate and device used thereby for separating oil from condensate**

(30) Priority: 03.12.1996 BE 9601006
(71) Applicant: ATLAS COPCO AIRPOWER N.V., 2610 Wilrijk (BE)
(72) Inventor: Talboom, Bart Anton Lode, 2550 Kontich (BE)
(74) Representative: Donné, Eddy

(57) **Abstract**

Compressor installation with oil separation from condensate which comprises, apart from at least one compressor (1,2) and at least one condensate separator (7), a device (10) for separating oil from condensate of the type which contains at least one coalescence filter (11), characterised in that the device (10) for separating oil from the condensate is not connected directly to the condensate separator (7) but to a chamber (9) under atmospheric pressure in which this condensate from which oil is to be separated is collected under atmospheric pressure, whereas this device (10) contains means (13) to drive the condensate under pressure through the coalescence filter (11).

## Description

The present invention concerns a compressor installation with oil separation from condensate and which thus comprises, apart from at least one compressor and at least one condensate separator, a device for separating oil from condensate of the type which contains at least one coalescence filter.

Such compressor installations contain oiled compressors and related appliances such as air driers, air storage vessels and filters which usually all have a built-in condensate separator.

Said condensate contains oil particles, so that it is prohibited to discharge this condensate in the sewerage without separating the oil first.

The devices for separating oil are installed after the condensate separators of these appliances.

Such compressor installations are known which contain a device for separating oil from the condensate which consist of a front separator for separating oil and water as a result of the difference in specific gravity and a coalescence filter connected onto it, followed by an active carbon filter.

A coalescence filter is a filter which transforms the emulsified oil in the condensate into larger oil drops which can then be separated from the water on the basis of the difference in specific weight.

These devices for separating oil work under atmospheric pressure, so that they are very voluminous and so that the coalescence filter is not very efficient. Most of the oil is adsorbed in the active carbon filter which is quickly saturated and needs to be replaced. These carbon filters form residual waste which requires processing or subsequent treatment.

In order to remedy the disadvantages of the use of carbon filters, devices for separating oil have already been designed which do not contain an active carbon filter but a compact coalescence filter and thus a filter material with a larger density, whereby pressure is required, however, to press the condensate through. The level of said pressure depends on the degree of saturation.

In order to obtain said pressure, the coalescence filter is installed after the float/condensate separator of the compressor and is connected directly onto it. In this float separator and in the line following this float separator thus prevails a pressure under which the condensate of the float separator is pressed through the coalescence filter.

This represents a number of dangers.

When the float/condensate separator does not shut off well and thus lets compressed air through, this compressed air is pressed through the filter, after which it ends up in the vessel where the oil is separated on the basis of the difference in specific weight. As this compressed air mixes with the water, the separation in this vessel is seriously disturbed.

Thus, time-controlled condensate separators cannot be used since they let compressed air through.

In order to prevent the oil and condensate from splashing as a result of pressure impulses in the line, a restriction has been provided in this line. Such a restriction is sensitive to contamination. When the restriction becomes obstructed, the float separator will no longer be able to discharge the condensate, and the condensate will be carried along with the air.

Moreover, in the above-described compressor installations, the device for separating oil from the condensate water may influence the rest of the installation, since this device is connected directly to the rest of the installation.

The invention aims a compressor installation with oil separation from condensate which excludes the above-mentioned and other disadvantages and which allows for an efficient separation of oil from condensate with among others a compact coalescence filter.

This aim is reached according to the invention in that the device for separating oil from condensate is not connected directly to the condensate separator, but to a chamber under atmospheric pressure in which this condensate from which the oil is to be separated, is collected under atmospheric pressure, whereas the device contains means to drive the condensate under pressure through the coalescence filter.

The above-mentioned means may contain a second chamber according to a specific embodiment which is erected under the above-mentioned chamber under atmospheric pressure, which is connected to the coalescence filter via an inlet and which is connected to the above-mentioned chamber under atmospheric pressure via a passage which can be shut off by means of a membrane which can be moved by means of a control pressure of gas under pressure in a room on one side of the membrane, whereby this room is also connected to the second chamber, so that this gas under pressure makes the control pressure also prevail in the second chamber, whereby the means also contain means which control the entrance of the gas under pressure into the room and consequently also into the second chamber.

According to another embodiment, these means may be a preferably level-controlled pump which is connected to the above-mentioned chamber under atmospheric pressure and which is connected to the coalescence filter.

The invention also concerns the device for separating oil from condensate which is apparently designed for the compressor installation according to any of the preceding embodiments.

In order to better explain the characteristics of the invention, the two following preferred embodiments of a compressor installation with oil separation from condensate and of a device used thereby for separating oil from condensate according to the invention are described as an example only without being limitative in any way, with reference to the accompanying drawings, in which:
figure 1 is a schematic representation of a compressor installation according to the invention;
figure 2 represents the part indicated by F2 in figure 1 to a larger scale;
figure 3 is a schematic representation of another embodiment of the compressor installation of figure 1.

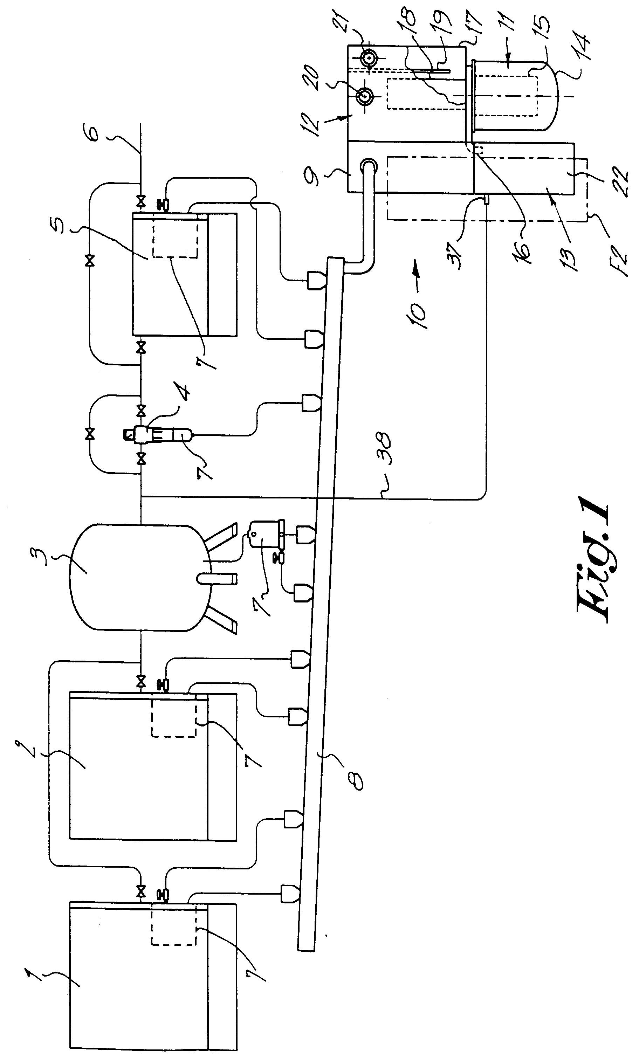

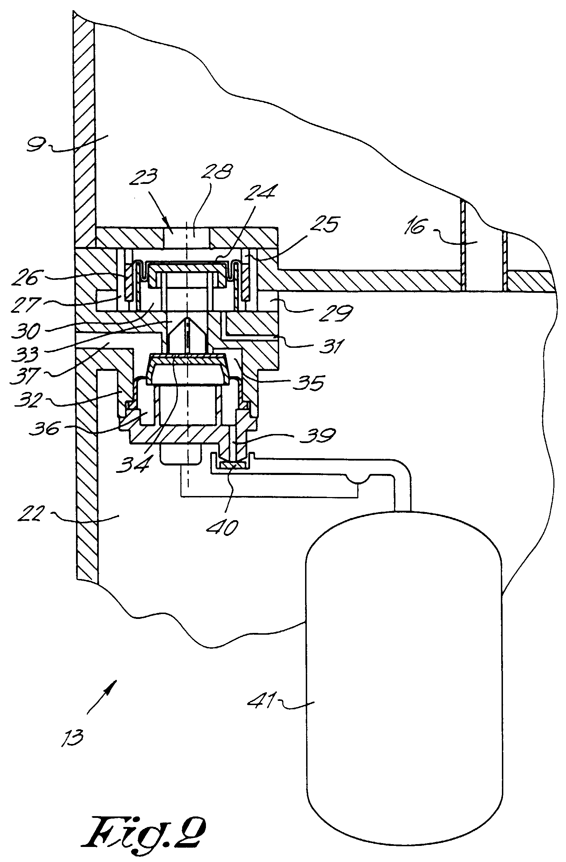

The compressor installation represented in figures 1 and 2 contains two compressors 1 and 2 which are both connected to a common air receiver 3 which is connected to the compressed-air line 6 towards the user over a compressed-air filter 4 and a drier 5.

The compressors 1 and 2, the compressed-air filter 4 and the drier contain a built-in condensate separator 7.

Onto the air receiver 3 is connected an external condensate separator 7.

The built-in condensate separators 7 of the compressors 1 and 2, of the compressed-air filter 4 and of the drier 5 and the external condensate separator 7 which is connected to the air receiver 3, are connected to a collector 8 which opens into a chamber 9 under atmospheric pressure of a device 10 for separating oil from condensate.

This device 10 contains a coalescence filter 11 and moreover a separation tank 12 which separates oil from water on the basis of a difference in specific weight and which is connected to the outlet of the coalescence filter 11, whereas means 13 are provided between the above-mentioned chamber 9 under atmospheric pressure and the inlet of the coalescence filter 11 to put the condensate under pressure so as to press it through the coalescence filter 11.

The coalescence filter 11 and the separation tank 12 may be of a known design, and they are represented only schematically in the figures.

The coalescence filter 11 may for example be of the type which contains a vessel 14 with a core 15 of a filtering mass, whereby the inlet 16 opens into the room around the core 15 and the outlet connects to the top side of the core 15.

The separation tank 12 may be of the type which contains a vessel 17 with a central, vertical overflow pipe 18 in it which is connected to the top side of the core 15 and next to it a vertical partition 19 which divides the tank 17 in two rooms and which ends at a distance from the bottom of the tank 17. The outlet 20 for oil is connected to the top side of the room in which the overflow pipe 18 is situated, whereas the outlet 21 for water is connected to the top side of the other room between the partition 19 and the wall of the tank 17.

In the embodiment according to figures 1 and 2, the above-mentioned means 13 contain a second chamber 22 which can be put under pressure, which is connected to the coalescence filter 11 via the inlet 16, which is situated under the chamber 9 under atmospheric pressure and which is connected to this chamber 9 by means of a passage 23 which can be shut off by a membrane 24.

As is represented in detail in figure 2, this membrane 24 is erected in a conduit 26 provided with openings 25 in a top chamber 27 which is part of the passage 23 and is connected to the chamber 9 under atmospheric pressure and the second chamber 22 respectively via openings 28 and 29.

The membrane 24 has elastic edges which connect to an edge standing on the bottom of the top chamber 27, such that a closed room 30 is formed under the membrane which is connected to the second chamber 22 via a little duct 31 in the bottom of the top chamber 27 on the one hand, and which is connected to a bottom chamber 32 via a passage 33 which can be shut off by a second membrane 34 on the other hand.

This second membrane 34 has a leak due to the presence of little openings in the edge of the membrane 34 and thus around the passage 33, and it divides the bottom chamber 32 in a top room 35 and a bottom room 36.

The top room 35 in which thus opens the above-mentioned passage 33 is also connected to a pressure source via an opening 37 and a control pressure line 38 connected onto the latter, namely a compressed-air source which, as is represented, can be a part of the compressor installation itself. The control pressure line 38 is connected to the installation, for example between the air receiver 3 and the compressed-air filter 4.

The lower room 36 is connected to the second chamber 22 via an opening 39. This opening 39 is normally shut off by means of a valve 40, but it can be opened by a float 41 which is erected in the second chamber 22.

The working of the above-described compressor installation and in particular of the separation of oil from the condensate thereof is simple and as follows.

The oil-containing condensate which has been separated in various places by the condensate separators 7 is collected in the collector 8 and gathered in the chamber 9 under atmospheric pressure which serves as a decompression chamber.

Normally, the membrane 24 is situated in the position as represented in figure 2, and the passage 23 is open.

As a result of the gravitational force, the condensate flows into the second chamber 22 via the passage 23 of the chamber 9 under atmospheric pressure.

The second membrane 34, the opening 39 which can be shut off by the valve 40 and the float 41 together form means which control the supply of air under pressure to the room 30 through the passage 33.

The second membrane 34 shuts off the passage 33 between the room 30 and the top room 35 of the bottom chamber 32 as long as the opening 39 is being shut off by the valve 40 which is controlled by the float 41, and thus as long as said float 41 is situated sufficiently low.

This is because the control pressure not only prevails in the top room 35 as a result of its being connected to the control pressure line 38 via the opening 37, but because the same control pressure also prevails in the shut-off bottom room 36 due to the leak in the second membrane 24, and thus at the bottom side of the membrane 24. The control pressure acts on a larger surface on said bottom side than on the other side, so that the membrane 34 is pushed up.

When the level of oil-containing condensate rises in the second chamber 22, the float 41 will rise as well and it will move the valve 40 at a certain level and open the opening 39.

As the opening 39 is larger than the leak through the second membrane 24, the pressure in the bottom room 36 falls out and the second membrane 34 drops. As a result, the passage 33 is opened and the room 30 will be put under control pressure, so that the membrane 24 is pushed up, the passage 33 is shut off and the supply of condensate to the second chamber 22 stops.

Moreover, this second chamber 22 is put under control pressure as compressed air flows in this second chamber 22 from the control pressure line 38 via the room 30 and the little duct 31 on the one hand, and via the leak in the second membrane 34 and the opening 39 on the other hand.

The condensate is then pressed, under pressure, from this second chamber 22 into and through the coalescence filter 11 connected onto it via the inlet 16.

Consequently, the level of condensate in the second chamber 22 will drop until the float 41 puts the valve 40 in its closing position again and the opening 39 is closed.

The bottom room 36 is again put under control pressure and the second membrane 34 is pushed up and closes off the passage 33. Via the little duct 31, the pressure in the room 30 falls out, so that the membrane 24 drops and the passage 23 opens.

The above-mentioned cycle can be repeated.

The condensate is continuously collected pressureless and is then intermittently pressed through the coalescence filter 11 under pressure. Only an amount of compressed air to supply the control pressure is required to this end. The separation of oil from the condensate does not effect the working of the compressor installation in any way.

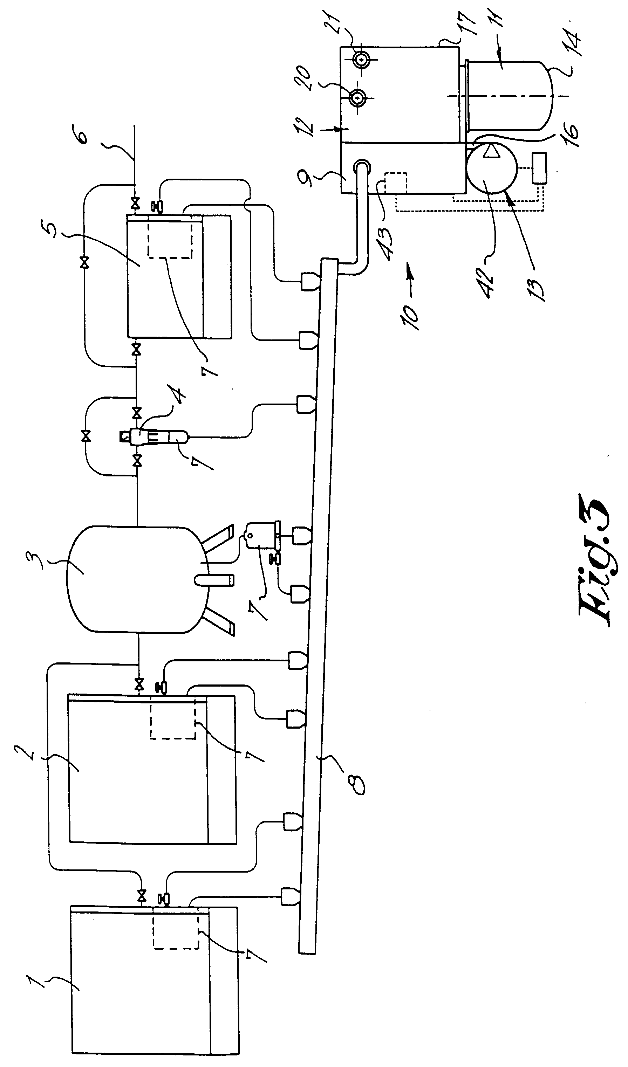

The embodiment as represented in figure 3 only differs from the embodiment according to figures 1 and 2 in that the means 13 to put the condensate under pressure have a different design.

In the embodiment according to figure 3, these means 13 consist of a pump 42 whose outlet is connected to the inlet 16 of the coalescence filter 11 and whose inlet is connected to the bottom side of the chamber 9 under atmospheric pressure.

This pump 42 is controlled by a hypsometer 43, for example a float, which is erected in the chamber 9.

The working of the compressor installation according to figure 3 is as described above, to the exception of the working of the means 13.

As soon as the level of the oil-containing condensate in the chamber 9 under atmospheric pressure reaches a certain height, the hypsometer 43 activates the pump 42 which pumps condensate from the chamber 9 under atmospheric pressure into the coalescence filter 11. The condensate is thus also intermittently and under pressure pressed through the coalescence filter 11.

The present invention is by no means limited to the above-described embodiments represented in the accompanying drawings. On the contrary, such a compressor installation with oil separation from condensate and the device for separating oil used thereby can be made in all sorts of variants while still remaining within the scope of the invention.

## Claims

1. Compressor installation with oil separation from condensate which comprises, apart from at least one compressor (1,2) and at least one condensate separator (7), a device (10) for separating oil from condensate of the type which contains at least one coalescence filter (11), characterised in that the device (10) for separating oil from the condensate is not connected directly to the condensate separator (7) but to a chamber (9) under atmospheric pressure in which this condensate from which oil is to be separated is collected under atmospheric pressure, whereas this device (10) contains means (13) to drive the condensate under pressure through the coalescence filter (11).

2. Compressor installation according to claim 1, characterised in that the above-mentioned means (13) contain a second chamber (22) which is erected under the above-mentioned chamber (9) under atmospheric pressure, which is connected to the coalescence filter (11) via an inlet (16) and which is connected to the above-mentioned chamber (9) under atmospheric pressure via a passage (23) which can be shut off by means of a membrane (24) which can be moved by means of a control pressure of gas under pressure in a room (30) on one side of the membrane (24), whereby this room (30) is also connected to the second chamber (22), so that this gas under pressure makes the control pressure also prevail in the second chamber (22), whereby the means (13) also contain means which control the entrance of the gas under pressure into the room (30) and consequently also into the second chamber (22).

3. Compressor installation according to claim 2, characterised in that the membrane (24) is erected such that it can be moved in a chamber (27) and in that the room (30) is connected to the second chamber (22) on one side of the membrane (24) via a little duct (31) in the wall of this chamber (27).

4. Compressor installation according to claim 2 or 3, characterised in that the means which control the entrance of the gas under pressure into the room (30) contain a float (41) which is erected in the second chamber (22).

5. Compressor installation according to claim 4, characterised in that the room (30) on one side of the membrane is connected to a chamber (32) via a passage (33) and in that the means which control the entrance of the gas under pressure into the room (30) contain a second membrane (34) which can shut off the passage (33) and which divides the chamber (32) into two rooms (35 and 36) which are connected to one another via a leak in the membrane (34), whereby the room (35) which is situated on the side of the passage (33) around this passage (33) is connected to a source of gas under pressure via a control pressure line (38), and whereby the other room (36) is connected to the second chamber (22) via an opening (39), which opening (39) lets more gas through than the above-mentioned leak of the membrane (34) and is shut off by a valve (40) which can be opened by the float (41) in the second chamber (22).

6. Compressor installation according to any of claims 2 to 5, characterised in that the gas under pressure is compressed air coming from a compressor (1,2) of the compressor installation.

7. Compressor installation according to claim 1, characterised in that the above-mentioned means (13) to drive the condensate under pressure through the coalescence filter (11) contain a pump (42) which is connected to the above-mentioned chamber (9) under atmospheric pressure and which is connected to the coalescence filter (11).

8. Compressor installation according to claim 7, characterised in that the pump (42) is controlled by a hypsometer (43) which is erected in the chamber (9) under atmospheric pressure.

9. Device for separating oil from condensate for a compressor installation according to any of the preceding claims, which device (10) contains a coalescence filter (11), characterised in that it contains means (13) to supply condensate under pressure to the coalescence filter (11).

10. Device according to claim 9, characterised in that the means (13) are identical to those in the compressor installation according to any of claims 2 to 8.
